(19) Europäisches Patentamt
European Patent Office
Office européen des brevets

(11) Publication number : 0 511 850 A1

# (12) EUROPEAN PATENT APPLICATION

(21) Application number : 92303871.5

(22) Date of filing : 29.04.92

(51) Int. Cl.[5] : C02F 5/10, C02F 5/14, C08F 222/06, C08F 220/06, C08F 222/02, C08K 5/5317

Amended claim in accordance with Rule 86 (2) EPC for the following Contracting State: ES.

(30) Priority : 30.04.91 US 693823

(43) Date of publication of application : 04.11.92 Bulletin 92/45

(84) Designated Contracting States : AT BE CH DE DK ES FR GB GR IT LI LU NL PT SE

(71) Applicant : CALGON CORPORATION
Route 60-Campbell's Run Road
Robinson Township Pennsylvania 15205 (US)

(72) Inventor : Yorke, Monica
1452 State Avenue
Coraopolis, PA 15108 (US)
Inventor : Matz, Gary F.
207 Alden Road
Carnegie, PA 15106 (US)
Inventor : Persinski, Leonard J.
340 Orchard Spring Road
Pittsburgh, PA 15220 (US)
Inventor : Bendiksen, Beverly
1410 State Avenue
Coraopolis, PA 15108 (US)

(74) Representative : Thompson, John Dr. et al
Merck & Co., Inc. European Patent
Department Terlings Park Eastwick Road
Harlow, Essex CM20 2QR (GB)

## (54) Terpolymer of itaconic acid for high PH scale control.

(57) A particular terpolymer of itaconic acid (IA) with acrylic acid (AA) and methacrylic acid (MAA), with a molar ratio of monomers of 25-35 AA : 30-40 MAA : 30-45 IA, has been found to give excellent inhibition of scale, especially $CaCO_3$ scale, at elevated pH's of 8.5 - 9.5, when used either alone or in combination with phosphonates and acrylate based copolymers.

EP 0 511 850 A1

## BACKGROUND OF THE INVENTION

### I. Field of the Invention

The present invention relates to the use of terpolymers of itaconic acid, specifically terpolymers of itaconic acid (IA) with acrylic acid (AA) and methacrylic acid (IA), with a molar ratio of monomers of 25-35 AA : 30-40 MAA : 30-45 IA, in a method of inhibiting the formation of alkaline earth metal scale deposits, especially calcium carbonate ($CaCO_3$) scale deposits, on metallic surfaces of water-carrying systems. Generally, calcium carbonate scale deposits are incrustation coatings which accumulate on the metallic surfaces of a water-carrying system through a number of different causes.

Various industrial and commercial water-carrying systems are subject to calcium carbonate scale formation problems. Calcium carbonate scale is of particular concern in heat exchange systems employing water, such as, for example, boiler systems, and once-through and open recirculating water cooling systems.

The water employed in these systems ordinarily will contain a number of dissolved salts, and the alkaline earth metal cation calcium is usually prevalent, as is the anion carbonate. The combination product of calcium cation and carbonate anion will precipitate from the water in which they are carried to form scale deposits when the concentration of the anion and cation comprising the reaction product, i. e., calcium carbonate, exceeds the solubility of the reaction product itself. Thus, when the concentrations of calcium ion and carbonate ion exceed the solubility of the calcium carbonate reaction product, a solid phase of calcium carbonate will form as a precipitate. Precipitation of the reaction product will continue until the solubility product concentrations of the constituent ions are no longer exceeded.

Numerous factors may be responsible for producing a condition of supersaturation for the reaction product calcium carbonate. Among such factors are changes in the pH of the water system, evaporation of the water phase, rate of heat transfer, amount of dissolved solids, and changes in the temperature or pressure of the system.

For boiler systems and similar heat exchange systems including cooling towers, the mechanism of scale formation is apparently one of crystallization of scale-forming salts from a solution which is locally supersaturated in the region adjacent the heating surface of the system. The thin viscous film of water in this region tends to become more concentrated than the remainder of the solution outside this region. As a result, the solubility of the scale-forming calcium carbonate salt reaction product is first exceeded in this thin film, and crystallization of calcium carbonate scale results directly on the heating or heat exchange surface.

In addition to this, a common source of scale in boiler systems is the breakdown of calcium bicarbonate to form calcium carbonate, water and carbon dioxide under the influence of heat. For open recirculating cooling water systems, in which a cooling tower, spray pond, evaporative condenser, and the like serve to dissipate heat by evaporation of water, the chief factor which promotes calcium carbonate scale formation is concentration of solids dissolved in the water by repeated evaporation of portions of the water phase. Thus, even a water which is not scale forming on a once-through basis usually will become scale forming when concentrated two, four, or six times. Moreover, alkalinity of the makeup water, with evaporative cycles over time results in an increasing alkalinity of the water in the overall system, often reaching pH's of 8.5 - 9.5 and even higher. Conventional scale inhibiting compositions typically fail in systems having such severe conditions.

The formation of calcium carbonate scale deposits poses a serious problem in a number of regards. The calcium carbonate scale which is formed possesses a low degree of heat conductivity. Thus, a calcium carbonate scale deposit is essentially an insulating layer imposed across the path of heat travel from whatever source to the water of the system. In the case of a boiler system, the retarded heat transfer causes a loss in boiler efficiency. Increased input of heat to compensate for this loss results in overheating of the boiler metal and consequent tube failures. In addition to this problem, calcium carbonate scale formation facilitates corrosive processes, and a substantial calcium carbonate scale deposit will interfere materially with fluid flow. Consequently, calcium carbonate scale is an expensive problem in many industrial water systems, causing delays and shutdowns for cleaning and removal.

Although the present invention is directed primarily to preventing or inhibiting the deposition of calcium carbonate scale, the most prevalent type of scale deposit, it is also applicable to inhibiting the deposition of other types of alkaline earth metal scales. For example, most industrial and commercial water contains alkaline earth metal cations, such as calcium, magnesium, etc., and several anions such as bicarbonate, carbonate, sulfate, oxalate, phosphate, silicate, fluoride, etc. When combinations of these anions and cations are present in concentrations which exceed the solubility of their reaction products, precipitates form until their product solubility concentrations are no longer exceeded. These precipitates are alkaline earth metal scales. Thus, by alkaline earth metal scales is meant scales including but not limited to calcium carbonate, magnesium carbonate, calcium phosphate, and calcium sulfate. These scales form frequently in the tubes of heat exchangers and on

other heat exchange surfaces.

The itaconic acid terpolymers are used as threshold inhibitors in the scale inhibition method of the present invention, rather than as sequestering or chelating agents.

Scale-forming compounds can be prevented from precipitating by inactivating their cations with chelating or sequestering agents, so that the solubility of their reaction products is not exceeded. Generally, this requires many times as much chelating or sequestering agent as cation, since chelation is a stoichiometric reaction, and these amounts are not always desirable or economical. However, several decades ago, it was discovered that certain inorganic polyphosphates would prevent such precipitation when added in amounts far less than the concentrations needed for sequestering or chelating.

When a precipitation inhibitor is present in a potentially scale-forming system at a markedly lower concentration than that required for sequestering the scale-forming cation (stoichiometric), it is said to be present in "threshold" amounts. See, for example, Hatch and Rice, Induct. Eng. Chem., 3l 5l-53 (l939); Reitemeier and Buehrer, J. Phys. Chem., 44 (5), 535-536 (l940); Fink and Richardson U.S. Pat. No. 2,358,222; and Hatch, U.S. Pat. No. 2,539,305.

Generally, sequestering takes place at a weight ratio of sequestration compounds to scale-forming cation components of greater than about l0:l, depending on the anion components in the water. Threshold inhibition generally takes place at a weight ratio of threshold active compounds to scale-forming cation components of less than about 0.5:l.0.

Recently, attention has been focused on controlling scaling under severe conditions, where conventional treatments such as those described above do not provide complete scale control. Current technology in scale control can be used to inhibit $CaCO_3$ scale up to l00 to l20 times calcite saturation, i.e., a water containing $Ca^{2+}$ and $CO_3^{2-}$ present at l00 times (l00 X) their solubility limit. However, what is desired are inhibitors effective in 300 X water, i.e., where the calcite ions can be prevented from precipitating as calcium carbonate scale using substoichiometric amounts of an inhibitor.

Severity of the scaling tendency of a water sample is measured using the saturation index, which may be derived in accordance with the following equation:

$$SI = \frac{(Ca^{2+})(CO_3^{\,2-})}{K_{sp}CaCO_3}$$

where SI is the saturation index for calcium carbonate, $(Ca^{2+})$ is the concentration of free calcium ions, $(CO_3^{\,2-})$ is the concentration of free carbonate ions, and $K_{sp}CaCO_3$ is the solubility product constant for $CaCO_3$. All of the quantities on the right side of the above equation are adjusted for pH, temperature and ionic strength.

One of the particular advantages of the scale inhibiting compositions of the present invention is the exceptional calcium tolerances which they exhibit. Calcium tolerance is a measure of a chemical compound's ability to remain soluble in the presence of calcium ions ($Ca^{2+}$). One of the parameters of scale control under severe conditions is pH. As pH increases, calcium tolerance decreases rapidly for traditional $CaCO_3$ threshold inhibitors, e.g., HEDP and AMP. These inhibitors precipitate with calcium at alkaline pH's, rendering them useless as threshold scale inhibitors. While it is common practice to use an acid feed to the water of, e.g., a cooling tower system in order to lower pH and thus avoid the calcium tolerance problem for conventional inhibitors, the danger to handlers which such acid feeding poses makes it all the more important to find scale inhibitors which operate at high pH's.

2. Brief Description of the Prior Art

Early efforts to reduce scale formation in water-carrying systems employed compounds such as tannins, modified lignins, algins, and other similar materials. Chelating or sequestering agents have also been employed to prevent precipitation or crystallization of scale-forming calcium carbonate. Another type of agent which has been actively explored heretofore as a calcium carbonate scale inhibiting material is the threshold active inhibitor. Such materials are effective as scale inhibitors in amounts considerably less than that stoichiometrically required, and this amount is termed the threshold amount. Inorganic polyphosphates have long been used as such threshold active inhibitors. For examples of such materials, see Fink - US 2,358,222; Hatch - US 2,539,305; and Ralston US 3,434,969. Certain water soluble polymers, including groups derived from acrylamide and acrylic acid have been used to condition water containing scale-forming calcium carbonate. For example, see US 2,783,200; 3,5l4,476; 2,980,6l0; 3,285,886; 3,463,730; 3,5l8,204; 3,928,l96; 3,965,027; and 4,936,987. In particular, there has been employed anionic polyelectrolytes such as polyacrylates, polymaleic anhydrides, copolymers of acrylates and sulfonates, and polymers of sulfonated styrenes. See, for example, US 4,640,793; 4,650,59l; and 4,67l,888. However, when used as threshold alkaline earth metal scale inhibitors, large dosages of these polymers are required, which in turn increases operating costs.

Itaconic acid has been used as a monomer in preparing various copolymers useful in various applications. For example, US 4,687,789 describes a process for preparing an aqueous pigment composition comprising a terpolymer of 2.5-96% acrylic acid, 2-95% methacrylic acid, and 2-40% itaconic acid. There is no mention, however, of antiscalant use of such terpolymers.

US 4,485,223 discloses antiscalant use of copolymers of from 5 to 90 mole percent of acrylic or methacrylic acid units and from about 95 to l0 mole percent of itaconic acid units, and having a number average molecular weight of from about 500 to 7000. Unlike the terpolymers used in the method of the present invention, it is preferred that there be from about 95 to 60 mole percent of itaconic acid units.

US 4,457,847 discloses antiscalant use of a water-soluble sequestrant anionic vinyl polymer containing at least 30% by weight of carboxylate functionality, and having a molecular weight within the range of 500-50,000. While acrylic acid, methacrylic acid, and itaconic acid monomers are mentioned, there is no suggestion of the terpolymers used in the method of the present invention, nor of their unique calcium tolerance at elevated pH's.

Other non-antiscalant uses of copolymers of (meth)acrylic acid and itaconic acid are also known; see, e.g., US 3,308,067 (detergent builder), 3,366,509 (sizing agent), and 3,507,647 (in lithographic printing).

## SUMMARY OF THE INVENTION

The present invention relates to a method of inhibiting the precipitation and deposition of scale-forming salts in an aqueous system, comprising the step of adding to said system an amount sufficient to establish a concentration of from l0 to l00 mg/L of a terpolymer having the following molar ratio of monomers: 25-35 AA : 30-40 MAA : 30-55 IA . In particular, the present invention relates to such a method in which calcium carbonate is the scale-forming salt, the terpolymer has the following molar ratio of monomers: 30 AA : 30 MAA : 40 IA, and said terpolymer is added to the aqueous system being treated in an amount sufficient to establish a concentration of from 30 to 50 mg/L.

The present invention also relates to a method of inhibiting the precipitation and deposition of scale-forming salts in an aqueous system, comprising the step of adding to said sytem an amount sufficient to establish a concentration of from l0 to l00 mg/L of (a) a terpolymer having the following molar ratio of monomers: 25-35 AA : 30-40 MAA : 30-45 IA; together with (b) a water-soluble phosphonate; wherein the ratio of (a) to (b) is from l.5 : l.0 to l.0 : l.5.

## DETAILED DESCRIPTION OF THE INVENTION

The scale inhibiting compositions for use in the method of treatment of the present invention are terpolymers of itaconic acid, specifically terpolymers of itaconic acid (IA) with acrylic acid (AA) and methacrylic acid (MAA), with a molar ratio of monomers of 25-35 AA : 30-40 MAA : 30-45 IA. These terpolymer compositions may be represented in structural form by the following general formula:

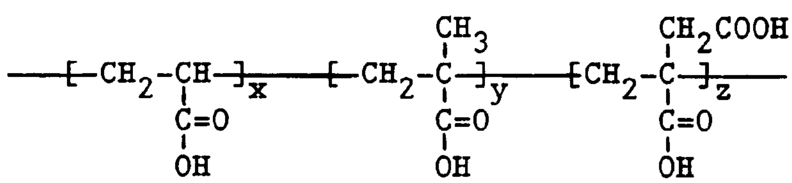

where "x", "y" and "z" are numbers representing the molar ratio of monomers of 25-35 AA : 30-40 MAA : 30-45 IA.

Particular terpolymers useful in the method of treatment of the present invention are, e.g., those having molar ratio of monomers of 3l AA : 37 MAA : 32 IA; 33 AA : 33 MAA : 33 IA; and 30 AA : 30 MAA : 40 IA.

The terpolymers used in the method of treatment of the present invention are preferably prepared in accordance with the procedures described in US 4,687,789, but employing therein the monomer charging method described in US 4,485,223, which has been found to substantially improve conversion of monomer. Thus, a typical polymerization procedure which would be employed to prepare said terpolymers would comprise the following steps:

a) precharge itaconic acid, cupric acetate (as catalyst) and water and bring to reflux;

b) at reflux, feed a monomer mix of acrylic acid and methacrylic acid for four hours;

c) at reflux, feed separate initiator streams of 25% hydrogen peroxide and 2.5% sodium metabisulfite for four and one-half hours;

d) hold the polymerization mix at reflux for one hour following the completion of the initiator feeds;

e) cool the mix and add sufficient 50% NaOH to adjust the pH to 5.0-5.5;

f) cool the polymer solution and use as is.

The molecular weight of the terpolymers used in the scale inhibition method of treatment of the present invention will be from 500 to l0,000, based on weight average molecular weight, and preferably will be in the range of from l,000 to 5,000, and most preferably 2,000 to 4,000. Molecular weights of terpolymers which have been prepared were initially checked using intrinsic viscosity measurements run in lN NaCl solution at pH about 8.5 and 30°C. Reduced viscosities were determined at 5, 3.33 and 2.5 g/dl and conformed by least squares to the Huggins Equation. Molecular weight was also checked by GPC using polyacrylic acid standards to calibrate relative elution times with molecular weight.

As part of the method of treatment of the present invention, it has been found beneficial to use the terpolymers of itaconic acid described above together with water-soluble phosphonates. These compositions are well known for use in inhibiting scale deposition and include, e.g., 2-phosphono-l,2,4-tricarboxybutane, amino tri(methylene phosphonic acid), hydroxyethylidene diphosphonic acid, phosphonosuccinic acid, benzene phosphonic acid, 2-aminoethyl phosphonic acid, methylaminodimethylphosphonate, and polyamino phosphonates, etc. Other water-soluble phosphonates of the type which are suitable for use with the itaconic acid terpolymers used in the method of treatment of the present invention are described in US 3,837,803. Preferred phosphonates include 2-phosphono-l,2,4-tricarboxybutane, amino tri(methylene phosphonic acid) and hydroxyethylidene diphosphonic acid. Where the total concentration of scale inhibiting composition to be used in the method of treatment of the present invention is set forth, and combinations of itaconic terpolymer and water-soluble phosphonate are employed, the concentration stated is the total concentration of the two inhibitor materials taken together. Ordinarily, the ratio of terpolymer : phosphonate will be within the range of 4:l to l:4 preferably l.0 : l.5 to l.5 : l.0.

When any of the above compositions are used to inhibit the precipitation and deposition of scale-forming salts in an aqueous system, they can be effectively employed for that purpose when added in amounts sufficient to establish a concentration in said aqueous system of from l0 to l00 mg/L. Preferably, the amount added will be sufficient to establish a concentration of from 20 to 75 mg/L, and most preferably, the amount added will be sufficient to establish a concentration of from 30 to 50 mg/L of the compound. It is understood, however, that many factors, of the type which have been explained in detail with regard to the background to the present invention, will determine the actual amount of itaconic terpolymer composition, optionally including a water-soluble phosphonate, which will be added to any particular aqueous system in order to achieve the maximum amount of inhibition of alkaline earth metal, especially calcium carbonate scale formation in that aqueous system. The calculation of those amounts will be well within the skill of the artisan in this field.

The phrase "inhibiting the precipitation" is meant to include threshold inhibition, dispersion, solubilization, or particle size reduction.

The phrase "scale-forming salts" is meant to include any of the scale-forming salts, including, but not limited to, calcium carbonate, calcium sulfate, calcium phosphate, calcium phosphonate (including calcium hydroxyethylidene diphosphonic acid), calcium oxalate, calcium fluoride, barium sulfate and magnesium salts.

The phrase "aqueous system" is meant to include any commercial or industrial system containing or utilizing water, including, but not limited to, cooling water, boiler water, desalination, gas scrubbers, blast furnaces, sewage sludge, thermal conditioning equipment, reverse osmosis, sugar evaporators, paper and pulp processing, mining circuits, and the like.

The manner of addition of any particular itaconic terpolymer composition, optionally including a water-soluble phosphonate, to an aqueous system, including a potable water source, will also be straightforward to a person of ordinary skill in this art. It may be added in finely subdivided solid form by mechanical dispensers of known design. It may also be added in solid form, but in the form of a matrix in which solid particles of the active ingredient are bonded or bound together by a material which is water soluble, or optionally, does not dissolve at all. Such a matrix allows for regular leaching out or dissolving of the active ingredient particles, whereby it is possible to obtain a sustained release and more unvarying concentration of the scale inhibiting composition in the water being treated. The particular itaconic terpolymer composition, optionally including a water-soluble phosphonate, may also be made up in the form of concentrated solutions for dispensing in liquid form from dispensers well known in the art. The itaconic terpolymer composition, optionally including a water-soluble phosphonate, may also be combined with other chemical treatment agents for dispensing to the aqueous system, including a potable water source; and these in combination may be dispensed in solid or liquid form.

## EXAMPLES OF THE PREFERRED EMBODIMENTS

The following examples demonstrate specific terpolymer embodiments for use in the scale inhibition method of treatment of the present invention, but are not intended to in any way limit the scope of the present in-

vention.

EXAMPLE I

pH 9 $CaCO_3$ Scale Inhibition

PROCEDURE: Various terpolymer embodiments for use in the method of treatment of the present invention were evaluated for $CaCO_3$ scale inhibition at pH 9 in accordance with following test protocol:

Conditions: 250 mg/L $Ca^{2+}$; 600 mg/L total alkalinity as $HCO_3^-$; pH obtained from natural buffering of an 80% $HCO_3^-$/20% $CO_3^{2-}$ mixture; 55°C for 24 hrs.

Procedures: (I) add inhibitor at desired concentration to flask; (2) add I0 ml of 0.3I3 M $CaCl_2 \cdot 2H_2O$ solution to provide 250 mg/L $Ca^{2+}$; (3) add I0 ml of 33g/L of $NaHCO_3$ to give 480 mg/L $HCO_3^-$ and I0 ml of I0.6 g/L $Na_2CO_3$ to give I20 mg/L $CO_3^{2-}$; (4) record pH of approximately 9 and place stoppered flask in a beaker bath or oven at 55° C; (5) at 24 hrs, remove flask and filter and (6) titrate filtrate for calcium content by the Schwarzenbach method; calculate percent inhibition.

The Schwarzenbach titration is carried out as follows. The number of mls of 0.0I M EDTA solution required to change the solution color from red to clear blue is recorded ($V_E$). The percent inhibition is calculated in accordance with the following equation:

$$\frac{V_E - V_0}{V_T - V_0} X\ I00 = \%\ \text{Inhibition}$$

$V_0$ = the Schwarzenbach titration volume with no inhibitor present (Control). Titration volume should be 5.0 - 6.0 ml (I00 - I20 mg/L $Ca^{+2}$ , 250 - 300 mg/L as $CaCO_3$) using a 20.0 ml sample.

$V_T$ = the Schwarzenbach titration volume when no precipitation occurs. Titration volume should be I0.0 ml (25 ml of 0.I M $CaCl_2 \cdot 2H_2O$ diluted to 500 ml with distilled water should be standardized to give a I0.0 ml Schwarzenbachtitration on a 20 ml sample.) (200 ml/L $Ca^{+2}$ , 500 mg/L as $CaCO_3$)

$V_E$ = the experimental Schwarzenbach titration volume when inhibitors are present in the test solution. Titration volumes will be between 5.0 - I0.0 ml using a 20 ml sample.

RESULTS: Following the above procedure, the following results were obtained:

TABLE 1

| SAMPLE NO. | MONOMERS | WEIGHT RATIO | % INHIBITION 30 ppm | 40 ppm | 50 ppm |
|---|---|---|---|---|---|
| WT-315A* | AA/IA/MAA | 31/32/37 | 72 | 72 | 79 |
| 1 | AA/IA/MAA | 33/33/34 | 71 | 85 | 83 |
| 2 | AA/IA/MAA | 30/40/30 | 76 | 84 | 88 |
| 3 | AA/IA/MAA | 25/50/25 | 71 | 74 | 82 |
| 4 | IA | 100% | 34 | 28 | 29 |

* Commercial product of Polacryl Co., Division of Coatex S.A., Caluire, France.

EXAMPLE 2

Effect of Polymerization on Inhibition

Polymerization in accordance with the method described in US 4,687,789 gave unacceptable conversion rates. When the process was modified by precharging itaconic acid and running the polymerization unneutralized, conversion was greatly improved. There was a corresponding improvement in % inhibition. Molecular weights of terpolymers which were prepared were initially checked using intrinsic viscosity measurements run

in IN NaCl solution at pH about 8.5 and 30°C. Reduced viscosities were determined at 5, 3.33 and 2.5 g/dl and conformed by least squares to the Huggins Equation. Molecular weight was also checked by GPC using polyacrylic acid standards to calibrate relative elution times with molecular weight.

In order to better distinguish the scale inhibition performance of the terpolymers used in the method of the present invention, the procedures used for determining $CaCO_3$ inhibition described in Example I above were modified by mixing calcium and alkalinity (along with the inhibitor) solutions of equal volume at the test temperature of 55°C. This modified procedure is described below.

PROCEDURE: Stock Solutions - (a) $CaCl_2$ - 46 g (0.3I3 M) $CaCl_2 \cdot H_2O$ is dissolved in distilled water; (b) $HCO_3^-/CO_3^{-2}$ - 33 g $NaHCO_3$ and I0.6 g $Na_2CO_3$ are dissolved in distilled water; (c) Inhibitor solutions - the inhibitor is dissolved in distilled water to a concentration of 0.5 g/L on an active solids basis, adjust pH to 8.5.

Solutions to Be Heated - (a) Alkalinity Solution - add 240 g distilled water to stoppered flask and place in oven or water bath controlled at 55°C; (b) Ca-Inhibitor Solution - distilled water added to 250 ml flask followed by I0 ml of 0.3I3M $CaCl_2$ solution and inhibitor solution, flask stoppered and placed in oven or water bath controlled at 55°C.

Preparing Test Solutions - (a) Alkalinity Addition - I0 ml of the $HCO_3^-/CO_3^{-2}$ solution Is added to alkalinity flask; (b) Solution Mixing - the alkalinity and inhibitor solutions are added to a 500 ml flask by pouring both solutions simultaneously through a funnel quickly to minimize cooling, record pH, stopper flask and place in constant 55°C temperature source for 24 hrs.

Analysis of Test Solutions - withdraw I0 g of test solution and add to appropriate container through 0.2 m filter and titrate for calcium and calculate % inhibition by the Schwarzenbach method.

The results obtained are shown in the table of values below.

## TABLE 2

### 33/33/34 AA/MAA/IA Terpolymers

| SAMPLE NO. | CONVERSION (WEIGHT %) AA | MAA | IA | [h] dl/g | Mw | % INHIBITION (50 ppm) |
|---|---|---|---|---|---|---|
| 5[a] | 64 | 82 | 63 | 0.052 | 2,000 | --- |
| 6[b] | 91 | 99 | 99 | 0.039 | 2,000 | --- |
| 1[c] | 99.5 | 100 | 100 | 0.062 | 3,000 | 80.7 |
| WT-315A | 100 | 100 | 100 | 0.068 | 2,300 | 68.3 |

[a] Prepared in accordance with Example 1 of US 4,687,789.
[b] Prepared as described further above in the specification, except the mixed monomer and precharges were neutralized to pH about 5.0.
[c] Prepared as described further above in the specification; same as sample no. 1 in Example 1.

EXAMPLE 3

Further Terpolymer Combinations

Further terpolymer embodiments for use in the scale inhibition method of the present invention were evaluated using the test procedure described above in Example 2. For comparison, copolymers were tested where acrylic acid and methacrylic acid or both (= itaconic acid homopolymer) were omitted. The test results are set out in the table of values below.

TABLE 3

AA/MAA/IA Terpolymer Variations

| SAMPLE NO. | COMPOSITION (WEIGHT %) AA | MAA | IA | [h] dl/g | Mw | % INHIBITION (50 ppm) |
|---|---|---|---|---|---|---|
| 1 | 33.0 | 33.0 | 34.0 | 0.062 | 3,000 | 80.7 |
| 7 | 30.0 | 30.0 | 40.0 | 0.065 | 3,000 | 78.5 |
| 8 | 25.0 | 25.0 | 50.0 | 0.051 | 2,000 | 59.1 |
| 9 | 40.0 | 0.0 | 60.0 | 0.113 | --- | 62.2 |
| 10 | 0.0 | 0.0 | 100.0 | 0.049 | --- | 61.1 |

EXAMPLE 4

Terpolymer : Phosphonate Combination

In order to further demonstrate the embodiment of the present invention relating to a combination of terpolymer and phosphonate, a benchtop dynamic test protocol of the type described further below was employed, which assesses in particular scale adherence control properties.

PROCEDURE: water containing Ca and alkalinity in an 80/20 ratio of $HCO_3^-$ : $CO_3^=$ is concentrated from a saturation level of 77X $CaCO_3$ to 300X $CaCO_3$ by evaporation and addition of $Ca^{+2}$ and $HCO_3^-$ ions. The heat transfer surface in the apparatus is a U-tube made of Admiralty brass. The apparatus loop includes a hot bath, a cold bath and three cells. Each cell consists of a jacketed beaker equipped with heat transfer U-tube, pH controller, level controller, thermometer, air vents and makeup tank. The pH is maintained at 9.0, temperature is maintained at 55°C, and air flow is 80-85 ml/minute, which gives an evaporation rate of about two-thirds liter per day. After the U-tubes are removed, the remaining bulk solution is analyzed for dissolved and suspended Ca, alkalinity, Cl and $PO_4$. Alkalinity is measured immediately on 0.2μ filtered sample, and particle size and zeta potential are measured on an unfiltered sample if precipitation has occurred or colloidal suspension exists. Scale deposit on the U-tube is removed by hydrochloric acid solution and analyzed for Ca and $PO_4$. The ratio of phosponate : polymer based on weight used in these evaluations was l.5:l.0, and all dosages were at 25 ppm. The results obtained are shown in the table of values below.

TABLE 4

| SAMPLE | DEPOSIT WT. Ca (MG) | PARTICLE SIZE AT 300X (NM) | ZETA POTENTIAL (mV) |
|---|---|---|---|
| HEDP/AMP/ WT-315A | 1.40 | 1185 | -5 |
| pHreeGUARD 2300 | 18.28 | 335 | -3.9 |

| | $PO_4$ (TUBE) MG | Ca (MG) |
|---|---|---|
| MADMP/WT-315A | 1.18 | 4.0 |
| Bayhibit AM/ TRC-233 | 1.21 | 1.88 |

HEDP = Hydroxyethylidene diphosphonic acid
AMP = Amino tri(methylene phosphonic acid)
WT-315A = Commerical product of Polacryl Co.
pHreeGUARD 2300 = HEDP/AMP/TRC-233 (60/40 acrylic acid/ acrylamidomethylpropane sulfonic acid copolymer)
MADMP = Methylaminodimethylphosphonate; $CH_2N(CH_2PO_3H)_2$
Bayhibit AM = 2-phosphono-1,2,4-tricarboxybutane

## Claims

1. A method of inhibiting the precipitation and deposition of scale-forming salts in an aqueous system, characterized by a pH of at least about 8.5 and a calcite saturation level of at least about 250X, comprising the step of adding to said system an amount sufficient to establish a concentration of from 10 to 100 mg/L of a terpolymer having the following molar ratio of monomers:
   25-35 AA : 30-40 MAA : 30-45 IA;
   where
   AA is acrylic acid;
   MAA is methacrylic acid, and
   IA is itaconic acid.

2. A method according to Claim 1 wherein calcium carbonate is the scale-forming salt, the terpolymer has the following molar ratio of monomers:
   30 AA : 30 MAA : 40 IA; and said terpolymer is added to the aqueous system being treated in an amount sufficient to establish a concentration of from 30 to 50 mg/L.

3. A method according to Claim 2 wherein the aqueous system being treated is a cooling tower.

4. A method of inhibiting the precipitation and deposition of scale-forming salts in an aqueous system, characterized by a pH of at least about 8.5 and a calcite saturation level of at least about 250X, comprising the step of adding to said system an amount sufficient to establish a concentration of from 10 to 100 mg/L of:

(a) a terpolymer having the following molar ratio of monomers:
25-35 AA : 30-40 MAA : 30-45 IA;
where
AA is acrylic acid;
MAA is methacrylic acid, and
IA is itaconic acid, together with
(b) a water-soluble phosphonate;
wherein the ratio of (a) to (b) is from 4.0 : 1.0 to 1.0 : 4.0.

5. A method according to Claim 4 wherein the water-soluble phosphonic acid is a member selected from the group consisting essentially of 2-phosphono-l,2,4-tricarboxybutane, amino tri(methylene phosphonic acid), hydroxyethylidene diphosphonic acid, phosphonosuccinic acid, benzene phosphonic acid, 2-aminoethyl phosphonic acid, methylaminodimethylphosphonate, and polyamino phosphonates.

6. A method according to Claim 4 wherein calcium carbonate is the scale-forming salt, the terpolymer has the following molar ratio of monomers:
30 AA : 30 MAA : 40 IA;
the water-soluble phosphonate is hydroxyethylidene diphosphonic acid, and said terpolymer and water-soluble phosphonate together are added to the aqueous system being treated in an amount sufficient to establish a concentration of from 30 to 50 mg/L.

7. A method according to Claim 6 wherein the aqueous system being treated is a cooling tower.

8. A method according to Claim 7 wherein the ratio of terpolymer : phosphonate will be within the range of 1.0 : 1.5 to 1.5 : 1.0.

9. A process for preparing a terpolymer having the following molar ratio of monomers:
25-35 AA : 30-40 MAA : 30-45 IA;
where
AA is acrylic acid;
MAA is methacrylic acid, and
IA is itaconic acid,
wherein the weight average molecular weight is from about 500 to 10,000,
which comprising the following steps:
a) the itaconic acid monomer is precharged with a cupric acetate catalyst and water and brought to reflux;
b) at reflux, a monomer mix of acrylic acid and methacrylic acid is fed to the reaction mixture for about four hours;
c) at reflux, separate initiator streams of 25% hydrogen peroxide and 2.5% sodium metabisulfite are fed to the reaction mixture for about four and one-half hours;
d) the polymerization reaction mixture is held at reflux for about one hour following the completion of the initiator feeds;
e) the reaction mixture is cooled and sufficient 50% NaOH is added to adjust the pH to 5.0-5.5;
f) the resulting polymer solution is then cooled to give the final produced.

10. A method of inhibiting the precipitation and deposition of scale-forming salts in an aqueous system characterized by a pH of at least about 8.5 and a calcite saturation level of at least about 250X, comprising the step of adding to said system an amount sufficient to establish a concentration of from 10 to 100 mg/L of a terpolymer according to Claim 9.

11. A method of inhibiting the precipitation and deposition of scale-forming salts in an aqueous system characterized by a pH of at least about 8.5 and a calcite saturation level of at least about 250X, comprising the step of adding to said system an amount sufficient to establish a concentration of from 10 to 100 mg/L of

(a) a terpolymer prepared according to process claim 9; together with

(b) a water-soluble phosphonate;
wherein the ratio of (a) to (b) is from 4.0 : 1.0 to 1.0 : 4.0.

European Patent Office

# EUROPEAN SEARCH REPORT

Application Number

EP 92 30 3871

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 125 519 (COATEX)<br>* page 6, line 7 - line 33 *<br>* page 8, line 37 - page 9, line 2 *<br>--- | 1,2,9,10 | C02F5/10<br>C02F5/14<br>C08F222/06<br>C08F220/06<br>C08F222/02<br>C08K5/5317 |
| X | EP-A-0 079 165 (PFIZER)<br>* page 3 - page 4, line 11 *<br>* page 9, line 6 - line 15 *<br>--- | 1,2,9 | |
| A | GB-A-2 054 548 (KURITA WATER INDUSTRIES)<br>* claims *<br>--- | 1-3,9 | |
| A | US-A-4 762 621 (THE GOODRICH COMPANY)<br>* the whole document *<br>--- | 1-3 | |
| A | EP-A-0 251 955 (COATEX)<br>* page 3, line 8 - line 37 *<br>* page 5 *<br>----- | 4,5,8,12 | |

TECHNICAL FIELDS SEARCHED (Int. Cl.5 )

C02F
C08F
C08K

The present search report has been drawn up for all claims

| Place of search | Date of completion of the search | Examiner |
|---|---|---|
| THE HAGUE | 31 JULY 1992 | GONZALEZ ARIAS,M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)